# FASCICULE DE BREVET EUROPEEN

(11) **EP 2 639 732 B1**
(45) Date de publication et mention de la délivrance du brevet: **20.05.2020**
(21) Numéro de dépôt: 13156807.3
(22) Date de dépôt: 26.02.2013
(51) Int. Cl.: G09C 1/00, G06F 21/34

(54) **Procédé et dispositifs de sécurisation de la saisie d'un code alphanumérique, produit programme d'ordinateur et moyen de stockage correspondants**
Verfahren und Gerät, um die Eingabe eines alphanumerischen Codes zu schützen, ein entsprechedendes Computerprogramm und ein Speichermedium dafür.
Method and device for securing the entry of an alphanumeric code, and corresponding computer program product and storage medium.

(30) Priorité: 13.03.2012 FR 1252268
(43) Date de publication de la demande: 18.09.2013
(73) Titulaire: Ingenico Group, 75015 Paris (FR)
(72) Inventeur: Rotsaert, Christopher, 59290 WASQUEHAL (FR)
(74) Mandataire: Vidon Brevets & Stratégie

(56) Documents cités:
- WO-A1-2009/069872
- DE-A1-102007 043 843
- US-A1- 2010 242 104

## Description

### 1. DOMAINE DE L'INVENTION

Le domaine de l'invention est celui de la saisie d'un code alphanumérique d'un utilisateur, par exemple un code confidentiel (code PIN, pour « Personal Identity Number » en anglais) dans le cadre d'une transaction bancaire ou pour accéder à un service protégé et sécurisé.

Plus précisément, l'invention concerne une technique de sécurisation d'une telle saisie, les données de code confidentiel étant des données sensibles.

L'invention s'applique notamment, mais non exclusivement, à la saisie de tels codes sur des dispositifs non sécurisés, tels que des terminaux mobiles ou des accessoires de paiement, encore appelés « readers », connectés à des dispositifs non sécurisés.

L'invention n'est pas limitée à un type particulier de dispositif ou d'utilisation du code alphanumérique.

### 2. ARRIÈRE-PLAN TECHNOLOGIQUE

Le fort développement actuel des moyens de paiement à l'aide de terminaux mobiles (tels que des téléphones mobiles) nécessite de développer également des moyens adaptés de sécurisation de telles transactions, du fait du caractère non sécurisé de ces terminaux, contrairement aux terminaux de transactions « classiques » sécurisés.

En effet, offrir la possibilité de payer par exemple avec son téléphone mobile doit être accompagné de moyens de sécurisation adaptés à ce mode de paiement, et notamment de moyens de sécurisation de la saisie du code confidentiel, classiquement utilisé pour valider un paiement.

Actuellement, on connaît des techniques de paiement via un terminal mobile utilisant un accessoire de paiement que l'on connecte au terminal mobile, offrant un dispositif remplaçant un terminal de transaction classique bien connu.

Cet accessoire de paiement connecté au terminal mobile servant de terminal de paiement permet notamment de lire les données d'une carte bancaire et de transmettre ces données au terminal mobile (pour une transmission ensuite vers un serveur sécurisé par exemple).

L'intérêt d'un tel accessoire de paiement réside dans son faible coût et sa facilité d'utilisation (il se connecte par exemple via une prise jack sur la sortie audio du terminal mobile).

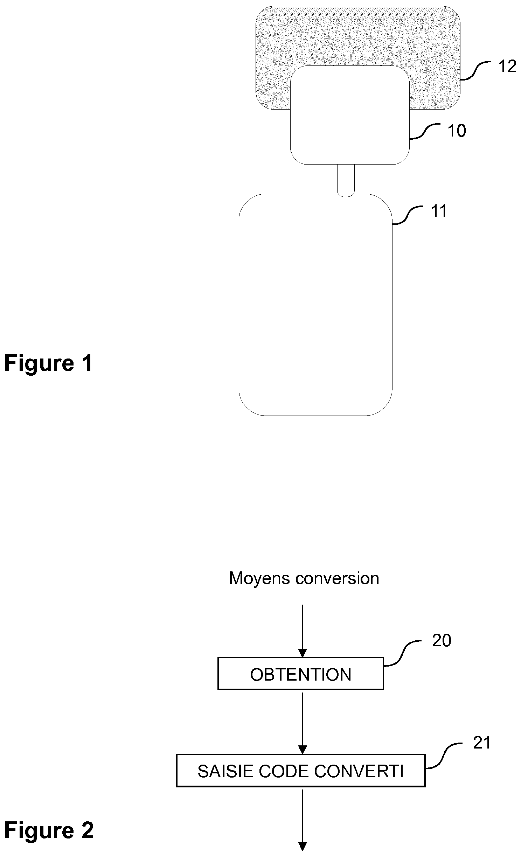

Un exemple d'un tel accessoire de paiement est illustré en figure 1, sur laquelle on peut voir un accessoire de paiement 10, connecté à un terminal mobile 11, permettant de lire une carte bancaire 12.

Ensuite, de manière classique, après avoir lu les données de la carte bancaire via l'accessoire de paiement, le terminal mobile requiert la saisie de son code confidentiel par l'utilisateur, sur le terminal mobile lui-même, qui ne présente pas le niveau de sécurité requis pour des données bancaires.

Il existe actuellement un certain nombre de techniques de sécurisation de la saisie d'un code alphanumérique confidentiel sur un terminal non sécurisé.

Par exemple, il existe une technique nommée « RevoPIN », décrite notamment dans le document de brevet WO2010131218_A1, consistant à transmettre au terminal mobile, par un serveur sécurisé, un clavier virtuel à usage unique, les touches du clavier virtuel étant permutées par rapport à un clavier « classique ». Ce clavier virtuel est affiché par le terminal mobile et c'est sur ce clavier virtuel que l'utilisateur saisit son code PIN. Le code transmis ensuite au serveur sécurisé est donc en fait un code permuté, le serveur sécurisé pouvant retrouver le code PIN d'origine grâce au clavier virtuel unique qu'il a généré lui-même pour la transaction.

Cette technique permet de ne pas transmettre le code PIN de l'utilisateur au serveur, mais n'assure pas un niveau de sécurité suffisant.

En effet, les informations de code permuté et de clavier virtuel étant présentes et donc potentiellement accessibles sur le terminal mobile, le code PIN peut être retrouvé par exemple par une application malveillante qui a accès, sur le terminal mobile, à ces deux informations.

Par ailleurs, dans le cas d'un code PIN avec redondance de chiffre, ce type de solution génère une perte d'entropie puisqu'il est possible de déduire du code permuté la présence et la position relative des chiffres du code de départ.

Les documents US 2010/242104 A1, DE 10 2007 043843 A1 et WO 2009/069872 A1 divulguent des procédés de sécurisation de transactions impliquant le chiffrement d'un code d'utilisateur par des codes à usage unique qui ont été obtenus par un dispositif autre que celui utilisé pour saisir le code.

Il existe donc un réel besoin de sécuriser ces techniques antérieures de saisie de code alphanumérique confidentiel sur un terminal non sécurisé.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de sécurisation de la saisie d'un code alphanumérique confidentiel permettant de réduire très fortement, voire d'éviter, les risques d'espionnage d'une telle saisie, dans un environnement non entièrement sécurisé.

Au moins un mode de réalisation de l'invention a également pour objectif de fournir une telle technique ne nécessitant pas d'autre dispositif que ceux à disposition du commerçant, par exemple son terminal mobile et un accessoire de paiement connecté.

Encore un objectif de l'invention, selon un mode de réalisation, est de fournir une technique de sécurisation permettant de n'avoir accès aux données sensibles (par exemple un code confidentiel) que sur un dispositif sécurisé, par exemple un serveur sécurisé.

Un autre objectif d'au moins un mode de réalisation de l'invention est de fournir une telle technique qui soit simple à mettre en œuvre et peu coûteuse.

### 4. EXPOSÉ DE L'INVENTION

Dans un mode de réalisation particulier de l'invention, il est proposé un procédé de sécurisation de la saisie d'un code alphanumérique par un utilisateur, mettant en œuvre les étapes suivantes :
- obtention, par un premier dispositif, de moyens de conversion d'au moins une portion du code alphanumérique en au moins une portion de code converti, la table de conversion étant à usage unique ;
- saisie, sur un deuxième dispositif distinct du premier dispositif, d'au moins la portion de code converti à l'aide des moyens de conversion.

Ainsi, le procédé selon un mode de réalisation de l'invention permet de sécuriser la saisie d'un code alphanumérique d'une part en utilisant un code converti et non le code alphanumérique confidentiel de l'utilisateur, et d'autre part en séparant, sur deux dispositifs distincts, la saisie en elle-même de la conversion du code confidentiel.

Pour ce faire, le procédé selon un mode de réalisation de l'invention prévoit d'obtenir, sur un premier dispositif, des moyens de conversion du code confidentiel de l'utilisateur, en un code converti qui sera effectivement saisi sur un deuxième dispositif. Ainsi, chacun des deux dispositifs n'a accès qu'à l'une ou l'autre des deux informations que sont le code confidentiel et les moyens de conversion, mais pas les deux informations, assurant ainsi la sécurisation de la saisie du code confidentiel.

De plus, ces moyens de conversion, par exemple sous la forme d'une table de conversion, sont à usage unique. Cela permet de renforcer la sécurité, les moyens de conversion ne pouvant pas être « déduits » d'une observation malveillante de plusieurs saisies successives de codes convertis.

Par ailleurs, il est prévu d'utiliser des moyens de conversion pour un code alphanumérique complet, ou pour une portion seulement d'un code alphanumérique.

Ainsi, par exemple, selon une première variante, des premiers moyens de conversion sont obtenus pour convertir tous les caractères d'un code confidentiel alphanumérique, et de nouveaux moyens de conversion sont obtenus pour la saisie ultérieure d'un autre code confidentiel.

Selon une autre variante, des premiers moyens de conversion sont obtenus pour convertir un seul caractère d'un code confidentiel alphanumérique. Il faut donc dans ce cas autant de moyens de conversion distincts que de caractères du code alphanumérique pour la saisie complète de ce code.

Selon une caractéristique particulière, le procédé de sécurisation met en œuvre une étape de transmission d'au moins la portion de code converti vers un serveur sécurisé.

Ainsi, le code converti, ou une portion du code converti, est donc transmis vers un serveur sécurisé, de façon à être traité de manière sécurisée.

De cette façon, le code confidentiel de l'utilisateur n'est pas transmis, seul un code converti est transmis, le code confidentiel d'origine n'étant donc pas déductible par une application, ou un dispositif, ne connaissant pas la table de conversion. La sécurité de la saisie du code confidentiel est donc renforcée.

Selon une caractéristique particulière, l'étape d'obtention obtient également une information d'identification des moyens de conversion et l'étape de transmission transmet également l'information d'identification des moyens de conversion.

Ainsi, à chaque obtention de moyens de conversion est associée un identifiant, permettant ultérieurement de connaître quels moyens de conversion ont été utilisés pour la conversion du code.

Ainsi, la transmission, vers le serveur sécurisé, de cet identifiant des moyens de conversion permet au serveur sécurisé d'avoir connaissance de toutes les informations nécessaires à la reconstruction du code confidentiel d'origine, lorsqu'il reçoit un code converti.

Selon une caractéristique particulière, l'étape d'obtention comprend une sous-étape d'affichage des moyens de conversion obtenus.

Ainsi, l'utilisateur peut convertir son code confidentiel et obtenir un code converti en visualisant les moyens de conversion affichés sur le premier dispositif et saisir ensuite le code converti obtenu sur le deuxième dispositif.

Selon une caractéristique particulière, l'étape d'obtention obtient les moyens de conversion et/ou l'information d'identification de la table de conversion par le serveur sécurisé.

Ainsi, on sécurise le mécanisme de saisie du code confidentiel dans la mesure où le traitement du code converti est effectué au sein d'un serveur sécurisé qui seul a connaissance à la fois du code converti saisi (transmis) et des moyens de conversion à utiliser (fournis par le serveur sécurisé lui-même).

Selon une caractéristique particulière, les moyens de conversion convertissent un chiffre en une lettre.

De cette façon, on améliore encore la sécurisation en supprimant le risque que l'utilisateur rentre par inadvertance son code confidentiel numérique et non le code converti.

Selon une mise en œuvre particulière, le procédé de sécurisation comprend, avant l'étape de transmission, une étape de chiffrement d'au moins la portion de code converti.

Dans cette mise en œuvre particulière, la sécurisation du mécanisme de saisie du code confidentiel est encore renforcée par le chiffrement (selon une méthode connue et non détaillée ici) du code converti, avant sa transmission vers le serveur sécurisé. Ainsi, non seulement le code confidentiel de l'utilisateur n'est pas transmis, mais le code converti est transmis chiffré, diminuant encore les risques d'obtention du code d'origine par espionnage de la saisie et de la transmission du code converti.

Selon une caractéristique particulière, l'étape de chiffrement met également en œuvre le chiffrement de l'information d'identification des moyens de conversion.

De cette façon, on améliore encore la sécurisation en ne transmettant pas en clair l'identifiant des moyens de conversion utilisés associés au code converti transmis. Aucune information n'est donc transmise en clair, ni le code converti ni l'identifiant des moyens de conversion utilisés.

Selon un mode de réalisation particulier, les premier et deuxième dispositifs sont respectivement un dispositif d'un commerçant impliqué dans une transaction nécessitant la saisie du code alphanumérique et un accessoire de paiement connecté au dispositif du commerçant.

Dans ce mode de réalisation particulier, le terminal du marchand reçoit, de la part du serveur sécurisé, des moyens de conversion d'un code alphanumérique en un code converti et les affiche, de façon à ce que l'utilisateur puisse s'en servir pour convertir son code confidentiel, en entier ou par portions successives, en un code (ou des portions de code) converti.

Une fois obtenu son code converti, ou une portion de code converti, l'utilisateur le (la) saisit sur un accessoire de paiement connecté au terminal du marchand, cet accessoire de paiement ayant préalablement servi à la lecture des données de la carte bancaire de l'utilisateur par exemple.

Ainsi, selon ce mode de réalisation particulier, le terminal du marchand n'a pas connaissance du code converti, qui est saisi sur l'accessoire de paiement, et l'accessoire de paiement n'a pas connaissance des moyens de conversion, qui sont connus et affichés uniquement par le terminal du marchand.

Selon une caractéristique particulière de ce mode de réalisation particulier, les moyens de conversion sont transmis au premier dispositif par le deuxième dispositif.

Par exemple, c'est l'accessoire de paiement qui génère une table de conversion et la transmet au terminal du marchand. L'accessoire de paiement peut ensuite par exemple chiffrer le code converti, en incluant l'identifiant de la table de conversion utilisée, et transmettre au serveur des informations chiffrées lui permettant de retrouver le code confidentiel, sans qu'aucune information en clair n'ait été transmise. Dans ce cas, il est alors préférable que l'accessoire de paiement soit sécurisé.

Selon un autre mode de réalisation particulier, les premier et deuxième dispositifs sont respectivement un accessoire de paiement connecté à un dispositif d'un commerçant impliqué dans une transaction nécessitant la saisie du code alphanumérique et le dispositif du commerçant.

Ainsi, selon ce mode de réalisation particulier, c'est l'accessoire de paiement qui génère et affiche les moyens de conversion, et c'est sur le terminal du marchand que l'utilisateur saisit un code converti.

Selon encore un autre mode de réalisation particulier, les premier et deuxième dispositifs sont respectivement un terminal mobile du utilisateur impliqué dans une transaction nécessitant la saisie du code alphanumérique et un accessoire de paiement connecté à un dispositif de paiement d'un commerçant impliqué dans la transaction.

Dans ce cas, le terminal mobile de l'utilisateur sert à obtenir et afficher les moyens de conversion, et l'accessoire de paiement sert à saisir le code converti. Le niveau de sécurité est ainsi relevé, en n'utilisant pas le terminal du marchand (qui peut être compromis) pour la saisie du code.

Selon une caractéristique particulière, l'étape de transmission est mise en œuvre par le premier dispositif ou le deuxième dispositif.

Ainsi, le code converti saisi par l'utilisateur peut être transmis directement par l'accessoire de paiement, s'il possède des moyens de transmission, vers le serveur sécurisé, ou bien l'accessoire de paiement transmet le code converti au terminal du marchand, qui les fait suivre au serveur sécurisé.

Si l'accessoire de paiement ne transmet pas directement au serveur sécurisé le code converti, il est préférable que l'accessoire de paiement chiffre ce code avant de le transmettre au terminal du marchand.

L'invention concerne également un produit programme d'ordinateur qui comprend des instructions de code de programme pour la mise en oeuvre du procédé précité (dans l'un quelconque de ses différents modes de réalisation), lorsque ledit programme est exécuté sur un ordinateur ou un processeur.

L'invention concerne également un médium de stockage lisible par ordinateur et non transitoire, stockant un programme d'ordinateur comprenant un jeu d'instructions exécutables par un ordinateur ou un processeur pour mettre en œuvre le procédé précité (dans l'un quelconque de ses différents modes de réalisation).

Dans un autre mode de réalisation de l'invention, il est proposé un dispositif de sécurisation de la saisie d'un code alphanumérique d'un utilisateur mettant en œuvre le procédé de sécurisation précité (dans l'un quelconque de ses différents modes de réalisation).

Avantageusement, le dispositif de sécurisation comprend des moyens de mise en œuvre des étapes qu'il effectue dans le procédé tel que décrit précédemment, dans l'un quelconque de ses différents modes de réalisation.

L'invention concerne également un accessoire de paiement mettant en œuvre le procédé de sécurisation précité (dans l'un quelconque de ses différents modes de réalisation).

Avantageusement, l'accessoire de paiement comprend des moyens de mise en œuvre des étapes qu'il effectue dans le procédé tel que décrit précédemment, dans l'un quelconque de ses différents modes de réalisation.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente un exemple d'accessoire de paiement connecté à un terminal mobile ;
- la figure 2 illustre les principales étapes du procédé de sécurisation selon un mode de réalisation particulier de l'invention ;
- la figure 3 présente un exemple de système dans lequel est mis en œuvre le procédé selon un mode de réalisation de l'invention ; et
- la figure 4 présente la structure d'un dispositif de sécurisation, selon un mode de réalisation particulier de l'invention.

### 6. DESCRIPTION DÉTAILLÉE

### 6.1 Principe général

Le principe général de l'invention repose sur la séparation, sur deux dispositifs distincts, des moyens de conversion d'un code alphanumérique en un code converti, et des moyens de saisie du code converti, permettant ainsi de renforcer la sécurité de la saisie d'un code alphanumérique confidentiel par exemple.

Dans un souci de simplification, on utilise dans la suite de la description l'exemple de moyens de conversion sous la forme d'une table de conversion.

Il est clair que la technique présentée ci-dessous, selon différents modes de réalisation de l'invention, n'est pas limitée à cet exemple de moyens de conversion.

### 6.2 Description d'un premier mode de réalisation de l'invention

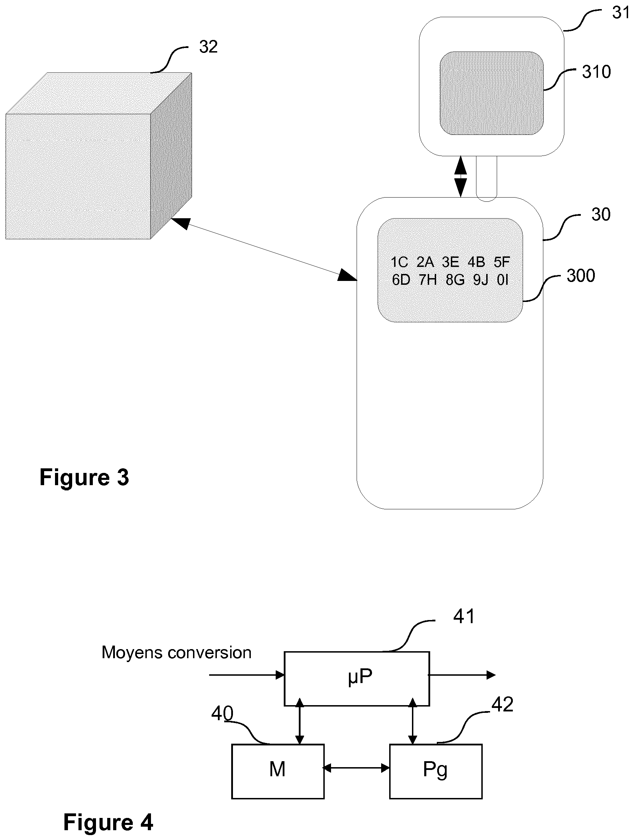

On présente maintenant, en relation avec les figures 2 et 3, les principales étapes du procédé de sécurisation de la saisie d'un code alphanumérique, ainsi qu'un exemple de système dans lequel l'invention peut être mise en œuvre, selon un mode de réalisation de l'invention.

Dans ce mode de réalisation particulier, des moyens de conversion sont obtenus pour convertir un code alphanumérique entier, une variante, décrite au paragraphe suivant, permettant la conversion de portions d'un code alphanumérique.

Dans ce mode de réalisation, une étape 20 d'obtention de moyens de conversion (par exemple une table de conversion), est mise en œuvre, de façon à permettre à l'utilisateur de convertir son code alphanumérique confidentiel en un code converti.

Cette étape 20 d'obtention est mise en œuvre sur un premier dispositif, par exemple, et comme illustré en figure 3, le terminal mobile 30 du marchand, sur lequel la transaction est mise en œuvre. Il est en effet de plus en plus fréquent pour un marchand d'utiliser son terminal mobile pour mettre en œuvre les transactions, au lieu de disposer d'un terminal de transaction spécifique.

Dans cet exemple, la table de conversion est transmise au terminal mobile 30 du marchand par le serveur sécurisé 32, en charge de la validation de la transaction.

Selon une deuxième variante, non illustrée, le premier dispositif peut être l'accessoire de paiement 31, ou bien encore un terminal mobile de l'utilisateur.

Une fois la table de conversion obtenue lors de l'étape 20, par le premier dispositif, celui-ci l'affiche, sur un écran 300 par exemple, de façon à ce que l'utilisateur y ait accès. Celui-ci convertit alors son code confidentiel alphanumérique en un code converti et saisit ce code converti, lors d'une étape 21, sur un deuxième dispositif.

Par exemple, et comme illustré en figure 3, le deuxième dispositif correspond à l'accessoire de paiement 31, connecté au terminal mobile du marchand 30.

Le deuxième dispositif comprend des moyens 310 de saisie du code converti, par exemple sous la forme d'un clavier, ou d'une dalle résistive imprimée, cette alternative permettant notamment de réduire le coût d'implémentation et d'utiliser cette même surface pour saisir le code converti et pour saisir une signature de l'utilisateur (fonctionnalité courante pour un accessoire de paiement).

Ainsi, selon ce mode de réalisation, le terminal mobile du marchand n'a connaissance que de la table de conversion et l'accessoire de paiement n'a connaissance que du code converti, de sorte que la saisie du code par l'utilisateur est fortement sécurisée.

En effet, un même dispositif impliqué dans le procédé selon ce mode de réalisation de l'invention, que ce soit le terminal mobile du marchand, ou l'accessoire de paiement, n'a pas connaissance des deux informations (la table de conversion et le code converti saisi) nécessaires à la reconstruction du code de départ. Une application « espion » dans l'un ou l'autre de ces deux dispositifs ne pourrait donc pas retrouver le code de départ, contrairement aux techniques de l'art antérieur.

Une table de conversion consiste par exemple à associer un chiffre à un caractère, comme illustré sur la figure 3. Un intérêt de cette mise en œuvre particulier réside dans la conversion d'un code numérique en un code composé de lettres, supprimant ainsi le risque que l'utilisateur saisisse par inadvertance son vrai code confidentiel numérique. Dans ce cas, le clavier 310 de l'accessoire de paiement présente donc par exemple uniquement des lettres, et non des chiffres.

Une fois le code converti saisi par l'utilisateur sur le deuxième dispositif, celui-ci le transmet au serveur sécurisé 32.

Cette transmission peut être mise en œuvre, selon une première variante, directement par l'accessoire de paiement, si celui-ci dispose de tels moyens de transmission. Cette variante permet en particulier de ne pas introduire d'intermédiaire dans la transmission, et donc de conserver un niveau de sécurité optimal.

Selon une deuxième variante, notamment lorsque l'accessoire de paiement ne dispose pas de moyens de transmission vers le serveur sécurisé, le code converti est d'abord transmis par l'accessoire de paiement 31 au terminal mobile du marchand 30, celui-ci transmettant ensuite le code converti vers le serveur sécurisé.

Selon un autre aspect particulier de ce premier mode de réalisation, le code converti saisi par l'utilisateur sur l'accessoire de paiement 31 est chiffré (selon une méthode connue et non détaillée ici) par ce dernier, avant d'être transmis au serveur sécurisé 32. En effet, l'accessoire de paiement est capable de chiffrer des données, comme les données lues de la carte bancaire, et il est judicieux d'utiliser cette capacité pour renforcer encore la sécurité de la saisie du code. Ainsi, non seulement la saisie du code converti est séparée de la table de conversion, sur deux dispositifs distincts, mais en plus, le code converti n'est pas transmis tel quel au serveur sécurisé, mais sous une forme chiffrée, uniquement déchiffrable par le serveur sécurisé (et l'accessoire de paiement).

Par ailleurs, pour que le serveur sécurisé puisse retrouver le code alphanumérique de départ, il doit également avoir connaissance de la table de conversion utilisée pour obtenir le code converti qu'il a reçu.

Ainsi, la transmission du code converti doit être accompagnée de la transmission d'une information permettant de retrouver cette table de conversion, par exemple une information d'identification de la table de conversion.

Dans ce mode de réalisation de l'invention, la table de conversion étant transmise au terminal mobile du marchand 30 par le serveur sécurisé 32, ce dernier transmet également une information d'identification de la table de conversion. Cette information est ensuite retransmise au serveur avec le code converti associé.

Dans la variante décrite ci-dessus, dans laquelle le code converti est chiffré par l'accessoire de paiement, le terminal mobile du marchand peut transmettre à l'accessoire de paiement l'identifiant de la table de conversion, sans transmettre la table elle-même, de façon à ce que l'accessoire de paiement chiffre également cette information d'identification de la table de conversion. Dans ce cas, seules des informations chiffrées sont transmises au serveur 32, le code converti chiffré et l'identifiant de la table de conversion chiffré. Ces deux informations peuvent éventuellement être combinées dans une seule donnée chiffrée.

Par ailleurs, comme déjà indiqué ci-dessus, ce mode de réalisation prévoit qu'une table de conversion est obtenue pour convertir un code alphanumérique entier, et une autre table de conversion est générée ultérieurement pour convertir un autre code alphanumérique.

Par exemple (comme illustré en figure 3), un code numérique composé de quatre chiffres « 1234 » est converti en un code converti de quatre caractères « CAEB ».

Une table de conversion est donc à usage unique, renforçant ainsi la sécurité du procédé selon l'invention. En effet, un observateur malveillant ne peut pas déduire le code de départ en observant plusieurs saisies successives d'un code converti, la table de conversion étant différente à chaque saisie.

### 6.3 Description d'un deuxième mode de réalisation de l'invention

Selon ce deuxième mode de réalisation, non illustré, une table de conversion est obtenue pour convertir une portion d'un code alphanumérique, et non un code alphanumérique entier.

Dans ce cas, plusieurs tables de conversion sont obtenues successivement pour convertir un code entier.

Ce mode de réalisation permet d'éviter la perte d'entropie liée à un code alphanumérique composé de plusieurs caractères identiques, qui serait converti en un code converti composé de plusieurs caractères identiques, si une seule table était utilisée pour convertir tous les caractères du code.

Ainsi, si l'on considère une table de conversion d'un chiffre vers une lettre, dont un exemple est illustré en figure 3, et un code numérique composé de quatre chiffres, quatre tables de conversion sont obtenues successivement pour convertir le code numérique entier.

Par exemple, on considère un code numérique composé de quatre chiffres « 1234 », à convertir à l'aide des quatre tables de conversion successives suivantes :
1C 2A 3E 4B 5F 6D 7H 8G 9J 0I : permet de convertir le « 1 » en « C »,
1J 2B 3G 4I 5A 6H 7C 8D 9E 0F : permet de convertir le « 2 » en « B »,
1A 2J 3B 4E 5C 6F 7D 8H 9I 0G : permet de convertir le « 3 » en « B »,
1I 2J 3G 4H 5D 6F 7B 8E 9A 0C : permet de convertir le « 4 » en «H ».

Le code « 1234 » est donc converti en « CBBH ».

Selon une première variante de ce mode de réalisation, chaque lettre du code converti peut être transmise au serveur sécurisé, au fur et à mesure, accompagnée d'une information d'identification de la table de conversion utilisée.

Selon une deuxième variante, le code converti entier est transmis au serveur sécurisé, une fois les quatre chiffres du code de départ convertis, ainsi que les identifiants des quatre tables de conversion utilisées.

### 6.4 Exemple de structure de dispositif de sécurisation selon un mode de réalisation de l'invention

La figure 4 présente la structure d'un dispositif 30 de sécurisation de la saisie d'un code alphanumérique, selon un mode de réalisation particulier de l'invention. Ce dispositif met en œuvre la technique présentée ci-dessus (dans l'un quelconque des modes de réalisation, présentés en relation avec les figures 2 et 3).

Dans cet exemple, le dispositif comprend une mémoire RAM 40 (pour « Random Access Memory » en anglais), une unité de traitement 41 (ou CPU, pour « Central Processing Unit » en anglais), équipée par exemple d'un processeur et pilotée par un programme stocké dans une mémoire ROM 42 (pour « Read Only Memory » en anglais). A l'initialisation, les instructions de code du programme sont par exemple chargées dans la mémoire RAM 40 avant d'être exécutées par l'unité de traitement 41. L'unité de traitement 41 obtient des moyens de conversion d'au moins une portion d'un code alphanumérique en au moins une portion de code converti, selon les instructions du programme 42, afin de mettre en œuvre la technique présentée ci-dessus (dans l'un quelconque des modes de réalisation).

Cette figure 4 illustre seulement une manière particulière, parmi plusieurs possibles, de réaliser la technique présentée ci-dessus.

## Revendications

1. Procédé de sécurisation de la saisie d'un code alphanumérique par un utilisateur lors d'une transaction, **caractérisé en ce qu'**il met en œuvre les étapes suivantes :
- obtention, par un premier dispositif (30):
• de moyens de conversion d'au moins une portion dudit code alphanumérique en au moins une portion de code converti, lesdits moyens de conversion étant à usage unique et empêchant la déduction du code de départ par observation de plusieurs saisies successives d'un code converti ;
• d'une information d'identification associée audits moyens de conversion, et permettant de connaître quels moyens de conversion ont été utilisés pour la conversion du code ;
- saisie, sur un deuxième dispositif (31) distinct dudit premier dispositif (30), d'au moins ladite portion de code converti par l'utilisateur à l'aide desdits moyens de conversion obtenus par le premier dispositif (30);
- transmission, vers un serveur sécurisé (32) en charge de la validation de la transaction, d'au moins ladite portion de code converti et de ladite information d'identification desdits moyens de conversion, permettant ainsi audit serveur (32) d'identifier les moyens de conversion préalablement utilisés pour la conversion de ladite portion de code converti afin de reconstruire ledit code alphanumérique d'origine,
et **en ce que** lesdits premier et deuxième dispositifs (30, 31) sont respectivement un dispositif d'un commerçant impliqué dans une transaction nécessitant la saisie dudit code alphanumérique et un accessoire de paiement connecté audit dispositif dudit commerçant, et les moyens de conversion étant transmis audit premier dispositif (30) par ledit deuxième dispositif (31).

2. Procédé selon la revendication 1, **caractérisé en ce que** ladite étape d'obtention comprend une sous-étape d'affichage desdits moyens de conversion obtenus.

3. Procédé selon la revendication 1, **caractérisé en ce qu'**il comprend, avant ladite étape de transmission, une étape de chiffrement d'au moins ladite portion de code converti.

4. Procédé selon la revendication 1 et la revendication 3, **caractérisé en ce que** ladite étape de chiffrement met également en œuvre le chiffrement de ladite information d'identification desdits moyens de conversion.

5. Procédé selon la revendication 1, **caractérisé en ce que** ladite étape de transmission est mise en œuvre par ledit premier dispositif ou ledit deuxième dispositif.

6. Produit programme d'ordinateur, comprenant des instructions de code de programme pour la mise en œuvre du procédé selon au moins une des revendications 1 à 5, lorsque ledit programme est exécuté sur un ordinateur ou un processeur.

7. Médium de stockage lisible par ordinateur et non transitoire, stockant un programme d'ordinateur comprenant un jeu d'instructions exécutables par un ordinateur ou un processeur pour mettre en œuvre le procédé selon au moins une des revendications 1 à 5.

8. Dispositif (30) de sécurisation de la saisie d'un code alphanumérique par un utilisateur selon le procédé d'une des revendications 1 à 5, **caractérisé en ce qu'**il comprend des moyens d'obtention de moyens de conversion d'au moins une portion d'un code alphanumérique en au moins une portion de code converti.

9. Accessoire de paiement (31), **caractérisé en ce qu'**il comprend des moyens de saisie d'au moins une portion de code converti selon le procédé de sécurisation de la saisie d'un code alphanumérique par un utilisateur de la revendication 1.

10. Dispositif selon la revendication 8 ou la revendication 9, **caractérisé en ce qu'**il comprend des moyens de transmission d'au moins une portion de code converti vers un serveur sécurisé.

## Patentansprüche

1. Verfahren zum Sichern der Eingabe eines alphanumerischen Codes durch einen Benutzer bei einer Transaktion, **dadurch gekennzeichnet, dass** es die folgenden Schritte umsetzt:
- Erhalten durch eine erste Vorrichtung (30):
• von Mitteln zum Konvertieren mindestens eines Abschnitts des alphanumerischen Codes in mindestens einen Abschnitt eines konvertierten Codes, wobei die Mittel zum Konvertieren zum einmaligen Gebrauch bestimmt sind und das Ableiten des Startcodes durch Beobachten mehrerer aufeinanderfolgender Eingaben eines konvertierten Codes verhindern;
• von einer Identifikationsinformation, die den Mitteln zum Konvertieren zugeordnet wird und ermöglicht zu erkennen, welche Mittel zum Konvertieren für das Konvertieren des Codes verwendet worden sind;
- Eingeben in eine zweite Vorrichtung (31), die von der ersten Vorrichtung (30) verschieden ist, von mindestens dem Abschnitt des konvertierten Codes durch den Benutzer mit Hilfe der Mittel zum Konvertieren, die durch die erste Vorrichtung (30) erhalten werden;
- Übertragen von mindestens dem Abschnitt des konvertierten Codes und der Identifikationsinformation der Mittel zum Konvertieren an einen sicheren Server (32), der für die Validierung der Transaktion zuständig ist, wodurch dem Server (32) auf diese Weise ermöglicht wird, die Mittel zum Konvertieren zu identifizieren, die zuvor für das Konvertieren des Abschnitts des konvertierten Codes verwendet worden sind, um den ursprünglichen alphanumerischen Code zu rekonstruieren,
und **dadurch gekennzeichnet, dass** die erste und die zweite Vorrichtung (30, 31) jeweils eine Vorrichtung eines Händlers, der an einer Transaktion beteiligt ist, die die Eingabe des alphanumerischen Codes erfordert, und ein Zahlungszubehör ist, das mit der Vorrichtung des Händlers verbunden ist, und wobei die Mittel zum Konvertieren durch die zweite Vorrichtung (31) an die ersten Vorrichtung (30) übertragen werden.

2. Verfahren nach Anspruch 1, **dadurch gekennzeichnet, dass** der Schritt des Erhaltens einen Unterschritt des Anzeigens der erhaltenen Mittel zum Konvertieren aufweist.

3. Verfahren nach Anspruch 1, **dadurch gekennzeichnet, dass** es vor dem Schritt des Übertragens einen Schritt des Verschlüsselns von mindestens dem Abschnitt des konvertieren Codes aufweist.

4. Verfahren nach Anspruch 1 und Anspruch 3, **dadurch gekennzeichnet, dass** der Schritt des Verschlüsselns auch das Verschlüsseln der Identifikationsinformation der Mittel zum Konvertieren aufweist.

5. Verfahren nach Anspruch 1, **dadurch gekennzeichnet, dass** der Schritt des Übertragens durch die erste Vorrichtung oder die zweite Vorrichtung umgesetzt wird.

6. Computerprogrammprodukt, das Programmcodebefehle für das Ausführen des Verfahrens nach mindestens einem der Ansprüche 1 bis 5 aufweist, wenn das Programm auf einem Computer oder einem Prozessor ausgeführt wird.

7. Computerlesbares und nichtflüchtiges Speichermedium, das ein Computerprogramm speichert, das einen Satz an Befehlen aufweist, die durch einen Computer oder einen Prozessor ausgeführt werden können, um das Verfahren nach mindestens einem der Ansprüche 1 bis 5 umzusetzen.

8. Vorrichtung (30) zum Sichern der Eingabe eines alphanumerischen Codes durch einen Benutzer nach dem Verfahren von einem der Ansprüche 1 bis 5, **dadurch gekennzeichnet, dass** es Mittel zum Erhalten von Mitteln zum Konvertieren mindestens eines Abschnitts des alphanumerischen Codes in mindestens einen Abschnitt eines konvertierten Codes aufweist.

9. Zahlungszubehör (31), **dadurch gekennzeichnet, dass** es Mittel zum Eingeben mindestens eines Abschnitts eines konvertierten Codes nach dem Verfahren zum Sichern der Eingabe eines alphanumerischen Codes durch einen Benutzer des Anspruchs 1 aufweist.

10. Vorrichtung nach Anspruch 8 oder 9, **dadurch gekennzeichnet, dass** es Mittel zum Übertragen mindestens eines Abschnitts des konvertieren Codes an einen sicheren Server aufweist.

## Claims

1. Method for securing the entry of an alphanumerical code by a user during a transaction, **characterized in that** it implements the following steps:
• obtaining, through a first device (30):
∘ means for converting at least one portion of said alphanumerical code into at least one portion of converted code, said means for converting being one-time converting means and preventing the deduction of the initial code by observing several successive entries of a converted code;
∘ a piece of information for identifying said means for converting, and making it possible subsequently to know which means for converting have been used for the conversion of the code;
• entering, into a second device (31) distinct from said first device (30), at least one code portion converted by the user by means of said means for converting obtained by the first device (30);
• transmitting, towards a secured server (32) in charge of validating the transaction, at least one portion of converted code and said piece of information for identifying said means for converting, enabling the secured server (32) to identify the means for converting previously used for converting said portion of converted code so as to reconstruct the original confidential code,
and **in that** said first and second devices (30, 31) are respectively a device of a merchant involved in a transaction necessitating the entry of said alphanumerical code and a payment accessory connected to said device of said merchant, and said means for converting are transmitted to said first device (30) by said second device (31).

2. Method according to claim 1, **characterized in that** said step for obtaining comprises a sub-step for displaying said obtained means for converting.

3. Method according to claim 1, **characterized in that** it comprises, before said step for transmitting, a step for encrypting at least said portion of converted code.

4. Method according to claim 1 and claim 3, **characterized in that** said step for encrypting also implements the encrypting of said information for identifying said means for converting.

5. Method according to claim 1, **characterized in that** said step for transmitting is implemented by said first device or said second device.

6. Computer program product comprising program code instructions for implementing the method according to at least one of the claims 1 to 5, when said program is executed on a computer or a processor.

7. Computer-readable and non-transitory storage medium storing a computer program comprising a set of instructions executable by a computer or a processor to implement the method according to at least one of the claims 1 to 5.

8. Device (30) for securing the entry of an alphanumerical code by a user according to the method according to claims 1 to 5, **characterized in that** it comprises means for obtaining means for converting at least one portion of an alphanumerical code into at least one portion of converted code.

9. Payment accessory (31) **characterized in that** it comprises means for entering at least one portion of converted code according to a method for securing the entry of an alphanumerical code by a user of claim 1.

10. Device according to claim 8 or claim 9 **characterized in that** it comprises means for transmitting at least one portion of converted code to a secured server.
